(19) Europäisches Patentamt
European Patent Office
Office européen des brevets

(11) **EP 0 877 507 B1**

(12) **EUROPÄISCHE PATENTSCHRIFT**

(45) Veröffentlichungstag und Bekanntmachung des Hinweises auf die Patenterteilung:
**26.09.2007   Patentblatt 2007/39**

(51) Int Cl.:
**H04L 9/08** *(2006.01)*

(21) Anmeldenummer: **98108118.5**

(22) Anmeldetag: **05.05.1998**

(54) **Ende-zu-Ende Verschlüsselung**

End-to-end encryption

Chiffrage point-à-point

(84) Benannte Vertragsstaaten:
**AT BE CH DE DK ES FI FR GB IE IT LI LU NL PT SE**
Benannte Erstreckungsstaaten:
**SI**

(30) Priorität: **05.05.1997   DE 19718583**

(43) Veröffentlichungstag der Anmeldung:
**11.11.1998   Patentblatt 1998/46**

(73) Patentinhaber: **T-Mobile Deutschland GmbH**
**53227 Bonn (DE)**

(72) Erfinder: **Kaliner, Stefan**
**53123 Bonn (DE)**

(74) Vertreter: **Riebling, Peter**
**Patentanwalt**
**Postfach 31 60**
**88113 Lindau (DE)**

(56) Entgegenhaltungen:
**EP-A- 0 529 261          US-A- 5 481 613**

- **JAN J K ET AL: "A PRACTICAL DESIGN FOR SECURE BROADCASTING - USING P.K.D. CONCEPT -" PROCEEDINGS OF THE INTERNATIONAL CARNAHAN CONFERENCE ON SECURITY TECHNOLOGY,US,NEW YORK, IEEE, 1993, Seiten 22-27, XP000452669 ISBN: 0-7803-1480-8**

**Beschreibung**

Gegenstand der Erfindung ist eine Ende-zu-Ende Verschlüsselung, genauer gesagt ein Verfahren zur Generierung und Verteilung von Geheimschlüsseln zur Ende-Zu-Ende Verschlüsselung von Informationen einer Kommunikationsverbindung in digitalen Kommunikationssystemen.

Unter der Bezeichnung Ende-zu-Ende Verschlüsselung (End-To-End-Encryption - ETEE) versteht man die Möglichkeit zum uni- oder bidirektionalen Austausch von Informationen (insbesondere Sprache aber auch Fax oder Daten) zwischen zwei Teilnehmern innerhalb eines digitalen Kommunikationssystems in verschlüsselter Form. Charakteristisch ist hierbei die Verschlüsselung am Ort des Senders und die Entschlüsselung erst beim Empfänger einer Nachricht wobei der dazwischenliegende Kommunikationskanal keinen Einfluß auf die Chiffrierung besitzt. Innerhalb der digitalen Übertragungskette existiert keine Möglichkeit zur Umwandlung der Nachricht in den ursprünglichen Klartext.

Die gegebenen Echtzeit-Anforderungen an geeignete Verschlüsselungsverfahren bedürfen unbedingt der Anwendung symmetrischer Chiffrier-Algorithmen mit identischen Geheimschlüsseln R beim Sender und beim Empfänger.

Ein Grundproblem ist dabei die Erzeugung der geheimen ETEE-Schlüssel R und deren sichere Übermittlung an die beiden Kommunikationspartner. Die an kryptographische Verfahren grundsätzlich zu stellende Forderung nach Sicherheit durch Geheimheit der Schlüssel, nicht durch Geheimheit der verwendeten Verfahren, führt auf die folgenden Anforderungen:

1. Die ETEE-Schlüssel müssen für jede Kommunikations-Sitzung einen individuellen, nicht vorhersagbaren Wert besitzen.

2. Der Ausgangswert zur Schlüsselgenerierung muß teilnehmerindividuell sein, d. h. bekannte Verfahren, welche die individuellen Schlüssel aus einem einzigen Master-Schlüssel ableiten, sind ungeeignet.

3. Zu keiner Zeit sollte ein ETEE-Schlüssel außerhalb einer sicheren Umgebung im Klartext oder einer anderen Form, die die Berechnung des Originalwertes erlaubt, erscheinen. Als sichere Umgebungen gelten nur die sender- und empängerseitigen Kommunikationseinrichtungen.

Die US-A 5,481,613 offenbart ein Verfahren zur Generierung und Verteilung von Geheimschlüsseln zur Ende-Zu-Ende Verschlüsselung von Informationen einer Kommunikationsverbindung zwischen zwei Teilnehmern (X; Y) eines digitalen Kommunikationssystems, das für die Ende-zu-Ende Verschlüsselung ein symmetrisches Verschlüsselungsverfahren anwendet, und der dafür benötigte geheime Schlüssel (R) mittels eines asymmetrischen Verschlüsselungsverfahrens zwischen den Teilnehmern ausgetauscht wird, wobei einer der beiden Teilnehmer den geheimen Schlüssel (R)generiert, mit dem öffentlichen Teil eines privaten Schlüssels des anderen Teilnehmers verschlüsselt und über das Kommunikationssystem an den zweiten Teilnehmer übergibt, und der zweite Teilnehmer die übergebene verschlüsselte Größe mit dem geheimen Teil seines Schlüssel entschlüsselt und so den geheimen Schlüssel (R)erhält, wobei die öffentlichen Schlüsselelemente (KPX, MX bzw. KPY, MY) jedes Teilnehmers in der zentralen.Komponente des Kommunikationssystems abgelegt sind, dass in Folge einer Verschlüsselungsanfrage des Teilnehmers (X) über einen unabhängigen Daten- oder Signalisierungskanal diesem von der zentralen Komponente des Kommunikationssystems die öffentlichen RSA-Schlüsselelemente (KPY, MY) des anderen Teilnehmers (X) zur Verfügung gestellt werden, dass seitens des ersten Teilnehmers (X) ein geheimer Schlüssel (R)als Zufallszahl generiert und abgespeichert wird, und der Schlüssel (R)mittels RSA-Verfahren unter Verwendung der öffentlichen RSA-Schlüsselelemente (KPY, KY) des zweiten Teilnehmers (Y) zu einem Wert (Z) verschlüsselt und über das Kommunikationssystem an den zweiten Teilnehmer (Y) übermittelt wird, und dass seitens des zweiten Teilnehmers (Y) der übermittelte Wert (Z) unter Verwendung der geheimen RSA-Schlüsselelemente (KSY, KY) des zweiten Teilnehmers (Y) zum geheimen Schlüssel (R)entschlüsselt und abgespeichert wird.

Die genannte Druckschrift offenbart das oben genannte Verfahren im allgemeinen Beschreibungsteil, in dem der Stand der Technik zu dieser Druckschrift gewürdigt wird.

Die bestimmte Schlüsselelemente verwaltende, zentrale Komponente des Kommunikationssystems ist in dieser Druckschrift als Certification Authority System (CAS) bezeichnet.

Die genannte CAS verwaltet demzufolge die öffentlichen Schlüssel der beiden Parteien A und B, wobei eine verschlüsselnde Partei (z. B. die Partei A) von der CAS ein Zertifikat anfordern muss, um auf der Basis dieses Zertifikates unter Zuhilfenahme einer Zufallszahl eine Verschlüsselung unter Benutzung des öffentlichen Schlüssels der Partei B zu veranlassen.

Dieses System setzt voraus, dass ein sicherer Schlüsseltransfer von der CAS zu der verschlüsselnden Partei gegeben ist. Dies mag zwar bei großen Computernetzwerken der Fall sein, von dem die US-A-5,481,613 ausgeht. Dort wird ein weitverzweigtes Computernetz vorausgesetzt, in dem die einzelnen Benutzer (Parteien) Sicherheits-Domänen bilden und davon ausgegangen wird, das eine Partei in der einen Sicherheits-Domäne mit einer in einer anderen Sicherheitsdomäne angesiedelten Partei eine Verschlüsselungsoperation durchführen will.

Problematisch hierbei ist, dass der Datenweg von der einen Partei zu der CAS eine sichere, nicht-kompromitierbare Datenverbindung voraussetzt.

Weiter ist nachteilig, dass in dem genannten weit verzweigten Computernetzwerk jede Partei mit jeder anderen Partei einen Verschlüsselungsvorgang einleiten kann, auf die Gefahr hin, dass bestimmte Parteien zu derartigen Verschlüsselungsvorgängen nicht berechtigt sind.

Im Übrigen dient die dort erwähnte CAS nur zur Verteilung von öffentlichen Schlüsseln (Zertifikaten), steuert jedoch nicht den Datenverkehr in Form eines Servers. Damit besteht der Nachteil, dass die Hauptlast der Verschlüsselungsarbeit in den Computern der Benutzer selbst stattfinden muss und dort kein sicheres Medium vorhanden ist.

Der Erfindung liegt deshalb die Aufgabe zugrunde, eine zentrale Komponente eines Kommunikationssystems der eingangs genannten Art so weiterzubilden, dass eine (gebührenpflichtige) Auswahl verschiedener Teilnehmer möglich ist, bei denen eine einfache und sichere Verschlüsselung gegeben ist.

Zur Lösung der gestellten Aufgabe ist die Erfindung durch die technische Lehre des Anspruches 1 gekennzeichnet.

Wesentliches Merkmal der Erfindung ist, dass die zentrale Komponente des Kommunikationssystems als gebührenpflichtiges Element ausgebildet ist, welches demzufolge lediglich über eine Berechtigungsanfrage des jeweiligen Benutzers aufrufbar ist. Es wird demzufolge erst die Berechtigungsanfrage des Benutzers abgearbeitet, bevor diese gebührenpflichtige Komponente die Leistungen eines ETEE-Servers zur Verfügung stellt, in dem im Wesentlichen die Verschlüsselungsarbeit abläuft.

Damit wird eine einfache Verwaltung auf dem ETEE-Server vorgeschlagen, und die eigentlichen Benutzer werden nicht mehr von derartigen Verwaltungsaufgaben belastet.

Mit der gegebenen technischen Lehre wird auch eine sichere Verschlüsselung gewährleistet, denn es ist vorgesehen, dass diese Verschlüsselung auf der Chip-Karte stattfindet. Damit wird ein Medium zur Verfügung gestellt, welches vom Benutzer leicht aus einem Gerät entnommen werden kann und welches - wie bekannt - eine übliche Authentifikationsroutine für den Benutzer bereit hält. Damit wird die Chip-Karte doppelt genutzt, denn über die Berechtigungsanfrage des Benutzers wird in üblicher Weise auf der Chipkarte gespeicherte Authentifikations-Routine abgefragt und gleichzeitig findet auch die sichere Verschlüsselung auf der Chip-Karte statt.

Damit ergeben sich besonders einfache und überschaubare Verschlüsselungsmechanismen, die auf dem sicheren Medium (Chip-Karte) ablaufen.

In der EP 0 529 661 A2 wird nur eine besondere Form der Verschlüsselung offenbart, ohne dass die wesentlichen Merkmale (gebührenpflichtiges Element mit Verwaltung auf einem ETEE-Server, Berechtigungsanfrage und Verschlüsselung auf der Chip-Karte) dort zu entnehmen sind.

Zur Lösung der Aufgabe ist die Erfindung durch die Merkmale des Anspruches 1 gekennzeichnet.

Vorteilhafte Weiterbildungen und Abwandlungen der Erfindung ergeben sich aus den Unteransprüchen.

Das vorliegende Konzept erfüllt die Anforderungen an Sicherheit und Individualität, ohn daß das Kommunikationssystem selbst Kenntnis über die Geheimschlüssel (R)erhält. Gleichzeitig obliegt dem System jedoch die Initiierung der Schlüsselübermittlung und somit die Kontrolle. über den Einsatz der Ende-zu-Ende Verschlüsselung. Falls das Verfahren in Form eines gebührenpflichtigen Zusatzdienstes gestaltet ist, kann die Gewährung in Abhängigkeit von bestimmten Eigenschaften des Teilnehmerverhältnisses vorgenommen werden. Gleichzeitig sind die Teilnehmer nicht mit der Speicherung und Verwaltung von Schlüsselelementen ihrer Kommunikationspartner belastet.

Das Verfahren verwendet eine dezentrale Generierung des ETEE-Schlüssels R auf Seiten des ETEE-anfordernden Teilnehmers X. Der Geheimschlüssel R wird mittels bekannter RSA-Verfahren (Verfahren nach Rivest, Shamir u. Adleman) unter Verwendung der öffentlichen RSA-Schlüsselelemente des Teilnehmers Y in verschlüsselter Form dem Teilnehmer Y übermittelt, dort mit den geheimen RSA-Schlüsselelementen des Teilnehmers Y zurückgeschlüsselt und steht nun auf beiden Seiten für die Verschlüsselung der Informationen zur Verfügung. Die öffentlichen RSA-Schlüsselelemente des Teilnehmers Y wurden dem Teilnehmer X zuvor von einer zentralen Komponente des Kommunikationssystems (ETEE-Server) zur Verfügung gestellt. Alle Berechnungen zur Generierung und Übermittlung des ETEE-Schlüssels sowie die Speicherung der geheimen RSA-Schlüsselelemente erfolgen in einer sicheren Komponente (z.B. Chipkarte) auf Seiten der Teilnehmer.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Figur 1 zeigt schematisch und allgemein das Grundprinzip einer verschlüsselten Verbindung zwischen zwei Teilnehmern X und Y;

Figur 2 zeigt schematisch eine Verschlüsselungsprozedur gemäß der Erfindung.

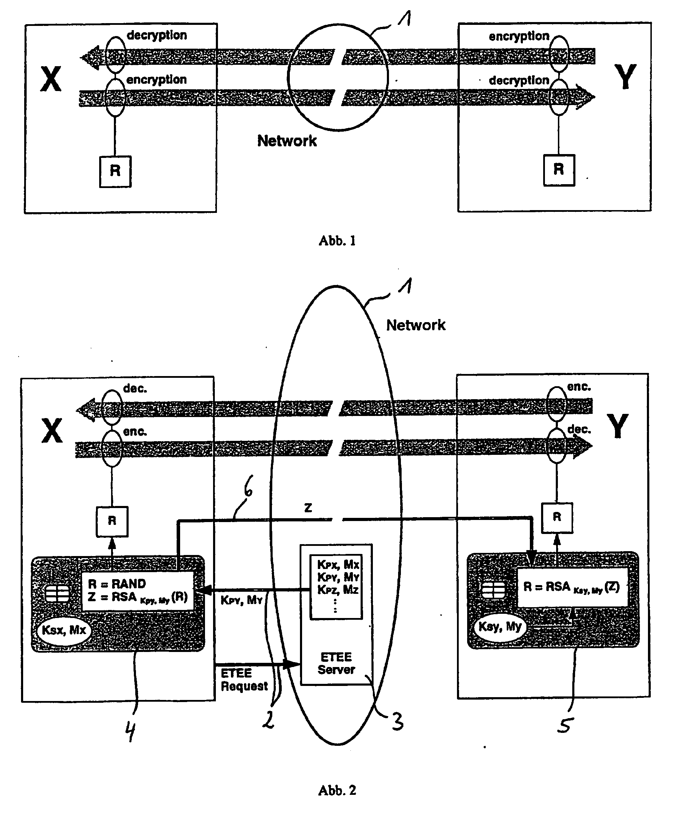

Figur 1 stellt schematisch und allgemein das Grundprinzip einer symmetrisch verschlüsselten Verbindung zwischen zwei Teilnehmern X und Y dar. Beide Teilnehmer X und Y verfügen endgeräteseitig über einen geheimen Schlüssel R, welcher auf beiden Seiten sowohl für die Verschlüsselung (Encryption) als auch die Entschlüsselung (Decryption) der über ein Kommunikationssystem/-netzwerk übermittelten Daten verwendet werden kann.

Problematisch dabei ist, daß beiden Teilnehmern, und nur diesen, der geheime Schlüssel bekannt sein darf. Bei nur zwei Teilnehmern ist das ohne Schwierigkeiten möglich, denn die Parteien können sich z.B. zuvor auf einen Schlüssel einigen. Bei einer Vielzahl von Teilnehmern ist dies jedoch nicht mehr möglich. Insbesondere dann, wenn aus Sicherheitsgründen der geheime Schlüssel laufend gewechselt wird.

Hier setzt die Erfindung ein. Gemäß Figur 2 möchte der Teilnehmer X eine bestehende oder aufzubauende Kommunikationsverbindung zum Teilnehmer Y mittels einer Ende-zu-Ende Verschlüsselung (ETEE) absichern.

Jeder Teilnehmer X oder Y verfügt über ein Endgerät mit einer sicheren Komponente 4 bzw. 5, z.B. eine Chipkarte, auf welcher die individuellen Teilnehmerdaten als auch die individuellen geheimen RSA-Schlüsselelemente $K_{SX}$, $M_X$ bzw. $K_{SY}$, $M_Y$ abgelegt sind.

Die öffentlichen RSA-Schlüsselelemente $K_{PX}$, $M_X$ bzw. $K_{PY}$, $M_Y$ usw. jedes Teilnehmers sind in einer zentralen Komponente 3 des Kommunikationssystems 1 abgelegt und auf Anfrage jedem berechtigten Teilnehmer zugänglich.

Über einen unabhängigen Daten- oder Signalisierungskanal 2 (z.B. Short Message Service in GSM Netzwerken) sendet Teilnehmer X einer zentralen Komponente 3 (z.B. ETEE-Server) des Kommunikationssystems 1 eine entsprechende Verschlüsselungsanfrage (ETEE-Request).

In der zentralen Komponente 3 des Kommunikationssystems wird die Berechtigung des Teilnehmers X zur Verschlüsselung geprüft, und das System antwortet im Gutfall mit den geheimen RSA-Schlüsselelementen, d.h. dem öffentlichen RSA-Schlüssel $K_{PY}$ und dem Modulus $M_Y$ des Y-Teilnehmers. Teilnehmer X übergibt die erhaltenen Daten an seine sichere Komponente 4 .

Die sichere Komponente 4 generiert nun einen ETEE-Schlüssel R als Zufallswert und verschlüsselt ihn mit $K_{PY}$ und $M_Y$ zu einem Wert Z. Der Schlüssel R wird auf der X-Seite zur Anwendung in der nachfolgenden Verbindung gespeichert.

R = RAND

$$Z \;=\; RSA \big| K_{PY}, M_Y \;(R)$$

Der Wert Z wird über einen Datenkanal 6 des Kommunikationssystems 1 dem Teilnehmer Y übermittelt und dort an dessen sichere Komponente 5 weitergeleitet.

Die sichere Komponente 5 entschlüsselt den Wert Z mit ihrem geheimen RSA-Schlüssel $K_{SY}$ und dem Modulus $M_Y$ und erhält den Geheimschlüssel R. Der Schlüssel R wird auf der Y-Seite gespeichert.

$$R \;=\; RSA \big| K_{SY}, M_Y \;(Z)$$

Identische ETEE-Schlüssel R stehen nun auf beiden Seiten X und Y zur Verfügung.

Es kann also eine symmetrische Ver- und Entschlüsselung der über das Kommunikationsnetz 1 ausgetauschten Informationen erfolgen.

Eine besondere Absicherung der Schlüssel R ist nicht erforderlich, da sie nur in den sender- und empfängerseitigen Einrichtungen (Endgeräten) vorhanden sind und außerdem nach Ende der ETEE-Kommunikation sofort ihre Gültigkeit verlieren. Jede weitere ETEE-Kommunikation würde mit neuen Schlüsseln geführt werden.

Ebenso unkritisch sind die öffentlichen RSA-Schlüsselelemente im ETEE-Server sowie deren Übertragungsweg zum X-Teilnehmer.

Auf Vorkehrungen gegen Ausspähen kann hierbei verzichtet werden.

Zeichnungslegende

R    Geheimer Schlüssel
X    Teilnehmer X
Y    Teilnehmer Y

Z  Verschlüsselte Größe

1  Kommunikationssystem
2  Datenkanal
3  Zentrale Komponente
4  Sichere Komponente
5  Sichere Komponente
6  Datenkanal

**Patentansprüche**

1.  Verfahren zur Generierung und Verteilung von Geheimschlüsseln zur Ende-Zu-Ende Verschlüsselung von Informationen einer Kommunikationsverbindung zwischen zwei Teilnehmern (X; Y) eines digitalen Kommunikationssystems, das für die Ende-zu-Ende Verschlüsselung ein symmetrisches Verschlüsselungsverfahren unter Verwendung einer, bestimmte Schlüsselelemente verwaltenden, zentralen Komponente des Kommunikationssystems anwendet, und der dafür benötigte geheime Schlüssel (R) mittels eines asymmetrischen Verschlüsselungsverfahrens zwischen den Teilnehmern ausgetauscht wird, wobei einer der beiden Teilnehmer den geheimen Schlüssel (R) generiert, mit dem öffentlichen Teil eines privaten Schlüssel des anderen Teilnehmers verschlüsselt und über das Kommunikationssystem an den zweiten Teilnehmer übergibt, und der zweite Teilnehmer die übergebene verschlüsselte Größe mit dem geheimen Teil seines Schlüssel entschlüsselt und so den geheimen Schlüssel (R) erhält, wobei die öffentlichen Schlüsselelemente (KPX, MX bzw. KPY, MY) jedes Teilnehmers in der zentralen Komponente (3) des Kommunikationssystems (1) als gebührenpflichtiger Zusatzdienst (5.3, Z. 2) abgelegt sind, wobei in der zentralen Komponente des Kommunikationssystems eine Prüfung erfolgt, ob der Teilnehmer zu einer Verschlüsselungsanfrage berechtigt ist, dass in Folge einer Verschlüsselungsanfrage des Teilnehmers (X) über einen von der Kommunikationsverbindung unabhängigen Daten- oder Signalisierungskanal (2) diesem von der zentralen Komponente (3) des Kommunikationssystems die öffentlichen RSA-Schlüsselelemente (KPY, MY) des anderen Teilnehmers (Y) zur Verfügung gestellt werden, daß seitens des ersten Teilnehmers (X) ein geheimer Schlüssel (R) als Zufallszahl generiert und abgespeichert wird, und der Schlüssel (R) mittels RSA-Verfahren unter Verwendung der öffentlichen RSA-Schlüsselelemente (KPY, KY) des zweiten Teilnehmers (Y) zu einem Wert (Z) verschlüsselt und über das Kommunikationssystem an den zweiten Teilnehmer (Y) übermittelt wird, und daß seitens des zweiten Teilnehmers (Y) der übermittelte Wert (Z) unter Verwendung der geheimen RSA-Schlüsselelemente (KSY, KY) des zweiten Teilnehmers (Y) zum geheimen Schlüssel (R) entschlüsselt und abgespeichert wird.und dass die Berechnungen zur Generierung und Übermittlung des geheimen Schlüssels (R) sowie die Speicherung der geheimen RSA-Schlüsselelemente ausschließlich in einer sicheren endgeräteseitigen Chipkarte auf Seiten der Teilnehmer erfolgt.

2.  Verfahren nach Anspruch 1, **dadurch gekennzeichnet, daß** die Ver- und Entschlüsselung des Werts (R) nach einem RSA-Verschlüsselungsverfahren erfolgt.

3.  Verfahren nach einem der Ansprüche 1, bis 2, **dadurch gekennzeichnet, daß** der generierte geheime Schlüssel (R) nach jeder Beendigung einer verschlüsselten Verbindung seine Gültigkeit verliert.

**Claims**

1.  Method for generating and distributing secret keys for end-to-end encryption of information of a communications link between two subscribers (X; Y) of a digital communications system which, for end-to-end encryption, employs a symmetrical encryption method using a central component of the communications system which manages certain key elements, and the secret key (R) needed for this is exchanged between the subscribers by means of an asymmetrical encryption method, one of the two subscribers generating the secret key (R), encrypting it with the public portion of a private key of the other subscriber and transferring it via the communications system to the second subscriber, and the second subscriber decrypting the transferred encrypted quantity with the secret portion of his key and so obtaining the secret key (R), the public key elements (KPX, MX or KPY, MY) of each subscriber being filed in the central component (3) of the communications system (1) as an additional paying service (5.3, line 2), a check being carried out in the central component of the communications system to see whether the subscriber is authorised to make an encryption inquiry, that, as a result of the encryption inquiry of the subscriber (X) via a data or signalling channel (2) independent of the communications link, the public RSA key elements (KPY, MY) of the other subscriber (Y) are made available to the first subscriber (X) from the central component (3) of the communications system,

that a secret key (R) is generated as a random number by the first subscriber (X) and stored, and the key (R) is encrypted into a value (Z) by the RSA method using the public RSA key elements (KPY, KY) of the second subscriber (Y) and transmitted via the communications system to the second subscriber (Y), and

that the transmitted value (Z) is decrypted into the secret key (R) by the second subscriber (Y) using the secret RSA key elements (KSY, KY) of the second subscriber (Y) and stored, and that the calculations for generating and transmitting the secret key (R) as well as storage of the secret RSA key elements take place exclusively in a secure chip card in the terminal on the side of the subscribers.

2. Method according to claim 1, **characterised in that** encryption and decryption of the value (R) take place by an RSA encryption method.

3. Method according to any of claims 1 to 2, **characterised in that** the generated secret key (R) loses its validity at the end of each encrypted link.


**Revendications**

1. Procédé pour générer et distribuer des clés confidentielles pour le chiffrement point à point d'informations d'une liaison de communication entre deux abonnés (X ; Y) d'un système de communication numérique qui applique pour le chiffrement point à point un procédé de chiffrement symétrique en utilisant un élément central dudit système de communication qui gère des éléments de clé définis, et la clé confidentielle (R) nécessaire pour cela est échangée entre les abonnés à l'aide d'un procédé de chiffrement asymétrique, étant précisé que l'un des deux abonnés génère la clé confidentielle (R), la chiffre avec la partie publique d'une clé privée de l'autre abonné et la transmet au second abonné par l'intermédiaire du système de communication, et le second abonné déchiffre avec la partie confidentielle de sa clé la grandeur chiffrée transmise et reçoit ainsi la clé confidentielle (R), étant précisé que les éléments de clé publics (KPX, MX et KPY, MY) de chaque abonné sont stockés dans l'élément central (3) du système de communication (1) comme service supplémentaire payant (5.3, Z.2), et étant précisé qu'un contrôle a lieu dans ledit élément central du système de communication pour voir si l'abonné est autorisé à faire une demande de chiffrement, de sorte qu'à la suite d'une demande de chiffrement de l'abonné (X) par l'intermédiaire d'un canal de données ou de signalisation (2) indépendant de la liaison de communication, l'élément central (3) du système de communication met à la disposition de l'abonné les éléments de clé RSA publics (KPY, MY) de l'autre abonné (Y);

que du côté du premier abonné (X), une clé confidentielle (R) est générée et mise en mémoire sous la forme d'un nombre aléatoire et cette clé (R) est chiffrée en une valeur (Z) à l'aide d'un procédé RSA et des éléments de clé RSA publics (KPY, KY) du second abonné (Y) et est transmise au second abonné (Y) par l'intermédiaire du système de communication, et

que du côté du second abonné (Y), la valeur (Z) transmise est déchiffrée et mise en mémoire à l'aide des éléments de clé RSA confidentiels (KSY, KY) du second abonné (Y) pour former la clé confidentielle (R) et que les calculs pour générer et transmettre la clé confidentielle (R) ainsi que la mise en mémoire des éléments de clé RSA confidentiels ont lieu uniquement dans une carte à puce sûre prévue côté terminal, du côté des abonnés.

2. Procédé selon la revendication 1, **caractérisé en ce que** le chiffrement et le déchiffrement de la valeur (R) ont lieu selon un procédé de chiffrement RSA.

3. Procédé selon l'une des revendications 1 à 2, **caractérisé en ce que** la clé confidentielle (R) générée perd sa validité après chaque achèvement d'une liaison chiffrée.

**Abb. 1**

**Abb. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5481613 A
- EP 0529661 A2